# EUROPÄISCHE PATENTSCHRIFT

(11) **EP 2 884 361 B1**
(45) Veröffentlichungstag und Bekanntmachung des Hinweises auf die Patenterteilung: **10.08.2022**
(21) Anmeldenummer: 13196906.5
(22) Anmeldetag: 12.12.2013
(51) Int. Cl.: G05B 19/4103, G05B 19/19

(54) **Verfahren zum Betrieb eines Bewegungssteuerungssystems und nach dem Verfahren arbeitendes Bewegungssteuerungssystem sowie Computerprogramm zur Implementierung des Verfahrens**
Method for operating a movement control system and movement control system operating according to the method and computer program for implementing the method
Procédé de fonctionnement d'un système de commande de mouvement et système de commande de mouvement fonctionnant selon ce procédé, ainsi que programme informatique pour l'implémentation du procédé

(43) Veröffentlichungstag der Anmeldung: 17.06.2015
(73) Patentinhaber: Siemens Aktiengesellschaft, 80333 München (DE)
(72) Erfinder: Mattil, Dirk, 91052 Erlangen (DE); Seelinger, Björn, 91054 Erlangen (DE); Geweth, Daniel, 63691 Ranstadt (DE)

(56) Entgegenhaltungen:
- EP-A1- 1 220 069
- EP-A1- 2 144 127
- EP-A2- 1 659 464
- US-A1- 2009 160 504

## Beschreibung

Die Erfindung betrifft ein Verfahren zum Betrieb eines Bewegungssteuerungssystems. Sie bezieht sich weiter auf eine Vorrichtung zur Durchführung des Verfahrens, also auf ein nach dem Verfahren arbeitendes Bewegungssteuerungssystem, sowie auf ein Computerprogramm zur Implementierung des Verfahrens und ein Computerprogrammprodukt, also einen Datenträger und dergleichen, auf dem ein solches Computerprogramm gespeichert ist.

Als Bewegungssteuerungssystem - in der Fachterminologie üblicherweise als Motion Control System bezeichnet - soll hier und im Folgenden eine Vorrichtung zur koordinierten Steuerung und/oder Überwachung von Achsen, zum Beispiel Achsen einer Produktions- oder Bearbeitungsmaschine (Maschine), verstanden werden. Werden mehrere Achsen gekoppelt, spricht man auch von einem elektronischen Gleichlaufverbund oder kurz von einem Gleichlaufverbund. Als Maschine kommt jegliche Motion Control Anwendung, mit der ein Transport, eine Prüfung, sowie eine Be- oder Verarbeitung von Werkstoffen erfolgt, in Betracht.

Bei dieser Art von Maschinen wird ein Sollwert der Achsen häufig über einen Gleichlaufverbund oder über andere Leitwerte (Position oder Zeit) gebildet.

EP 1 220 069 A1 beschreibt ein Verfahren zur Erstellung flexibler Kurvenscheibenfunktionen. Dazu wird eine Bewegung eines Maschinenelementes durch die Kurvenscheibenfunktion abschnittsweise beschrieben, indem einzelne aufeinanderfolgende Bewegungsabschnitte durch Segmente und/oder Punkte definiert werden und zwischen solchen Bewegungsabschnitten nach einer vorgebbaren Interpolationsvorschrift interpoliert wird, wobei Befehle zur Vorgabe und/oder zum Einfügen von Punkten, Segmenten und Interpolationsvorschriften zur Laufzeit bereitgestellt werden, wobei die Kurvenscheibenfunktion über Befehle im Laufzeitsystem einer Maschinensteuerung erstellt wird.

EP 2 144 127 A1 beschreibt ein Verfahren zum Aufsynchronisieren eines Aufnehmers eines mehrachsigen Handlingsgerätes mit einem aufzunehmenden Objekt, welches von einer Fördereinrichtung mitgeführt wird, und/oder zum Aufsynchronisieren des Aufnehmers mit einer angetriebenen Fördereinrichtung, um ein bereits aufgenommenes Objekt dort abzusetzen. Der Aufnehmer wird entlang einer rechnerisch ermittelten Polynombahn mindestens der 3. Ordnung zwischen einem Startpunkt und einem Zielpunkt aufsynchronisiert.

Bewegungssteuerungssysteme der oben genannten Art bieten dafür spezielle Funktionen, zum Beispiel sogenannte elektronische Kurvengetriebe (VDI2143) an, bei denen der häufig nicht lineare Zusammenhang zwischen Leit- und Folgewert über sogenannte Kurvenscheiben definiert ist. Dabei besteht auch die Möglichkeit, solche elektronischen Kurvenscheiben und dergleichen über ihren Folgewertbereich (Ordinate) und Leitwertbereich (Abszisse) zu skalieren. Hierbei handelt es sich jedoch um eine lineare Skalierung. Eine lineare abschnittsweise Skalierung kann bei geforderter C²-Stetigkeit aufgrund der resultierenden Unstetigkeiten in den Ableitungen jedoch nur in sogenannten Rastbereichen (VDI2143), wenn sich der Folgewert der Kurvenscheibe nicht ändert und somit die Folgeachse steht, verwendet werden.

Der Erfindung liegt daher die Aufgabe zugrunde, eine verbesserte Möglichkeit zur Skalierung der jeweiligen Folge- und Leitwertebereiche anzugeben. Einsatzfälle sind die Vorgabe eines Versatzwinkels bei Getriebe- und Kurvengleichläufen, eine Druckmarkenkorrektur oder eine Anpassung synchroner Bewegungen mehrerer Achsen.

Diese Aufgabe wird erfindungsgemäß mit den Merkmalen des Anspruchs 1 gelöst.

Die oben genannte Aufgabe wird ebenfalls durch eine Vorrichtung zur Durchführung des Verfahrens, nämlich ein nach dem Verfahren arbeitendes Bewegungssteuerungssystem, gelöst. Dazu ist vorgesehen, dass die Vorrichtung bzw. das Bewegungssteuerungssystem Mittel zur Durchführung des Verfahrens umfasst.

Als ein derartiges Mittel kommt insbesondere ein Computerprogramm zur Durchführung des Verfahrens und der davon umfassten Verfahrensschritte in Betracht. Die Erfindung ist damit einerseits auch ein Computerprogramm mit durch einen Computer, nämlich das Bewegungssteuerungssystem und eine davon umfasste Verarbeitungseinheit, ausführbaren Programmcodeanweisungen und andererseits ein Speichermedium mit einem derartigen Computerprogramm, also ein Computerprogrammprodukt mit Programmcodemitteln, sowie schließlich ein Bewegungssteuerungssystem mit einem Speicher, in den als Mittel zur Durchführung des Verfahrens und seiner Ausgestaltungen ein solches Computerprogramm geladen oder ladbar ist.

Die Erfindung geht dabei von der Erkenntnis aus, dass sich eine C²-stetige Skalierungsfunktion realisieren lässt, indem der Skalierungsbereich über sogenannte Beziersplines, und zwar Beziersplines 4. Ordnung, definiert wird. Über Gewichtspunkte (Gewichte), werden die Steigungen und Krümmungen der Beziersplines vorgegeben. Die Gewichtspunkte werden nach den bekannten Spline Algorithmen (zum Beispiel: Numerik-Algorithmen, Springer Verlag ISBN 3-540-62669-7) ermittelt. Durch die geeignete Wahl der Gewichtspunkte wird ein monotoner Verlauf der Beziersplines mit einer homogenen Krümmungsverteilung erreicht.

Das Verfahren zeichnet sich entsprechend dadurch aus, dass die Gewichtspunkte eines die C²-stetige Funktion einschließenden und deren Verlauf bestimmenden Polygons ermittelt werden, welche einen monotonen Verlauf der C²-stetigen Skalierungsfunktion und eine homogene Krümmungsverteilung entlang der C²-stetigen Skalierungsfunktion gewährleisten.

Der Vorteil der Erfindung besteht darin, dass der Verlauf der Kurvenscheibe des Gleichlaufverbunds aufgrund der C²-Stetigkeit der Skalierungsfunktion unabhängig von der Übertragungsfunktion des Gleichlaufverbundes im kompletten Leit- und Folgebereich abschnittsweise C²-stetig gestreckt oder gestaucht werden können.

Einsatzgebiete für die hier vorgestellte Möglichkeit zum abschnittsweisen Strecken oder Stauchen von in einem Gleichlaufverbund koordinierten Achsen (partielle nichtlineare Skalierung) sind die Vorgabe eines Versatzwinkels, eine Druckmarkenkorrektur und eine synchrone Bewegung mehrerer Achsen.

Ein konkretes Beispiel betrifft die Qualitätssicherung bei kontinuierlich laufenden Maschinen und dort die Vorgabe eines Versatzwinkels zwischen einer ersten Achse (Master) und einer zweiten Achse (Slave). Dabei wird über eine Mechanik jedes n-te Produkt eines kontinuierlich laufenden Prozesses geprüft. Nach einer vorgebbaren Anzahl an Produkten soll die Stelle der Qualitätssicherung gewechselt werden. Dies wäre beispielsweise über die Vorgabe eines überlagerten Offsets möglich. Wird dieser Offset durch eine überlagerte Positionierung abgesetzt, führt dies jedoch zu dem Nachteil, dass zum Zeitpunkt der Ausgleichbewegung keine feste Kopplung zwischen Master und Slave vorliegt. Wird zu diesem Zeitpunkt der Master gestoppt (z.B. durch Notaus), könnte dies dazu führen, dass der Slave rückwärts läuft. Dies ist bei vielen Maschinen jedoch nicht zulässig. Dieses Beispiel wird im speziellen Beschreibungsteil mit weiteren Details erläutert.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Es zeigen
- FIG 1: eine Produktionsmaschine, die für eine Steuerung gemäß einem Verfahren wie hier beschrieben in Betracht kommt und dafür ein entsprechendes Antriebs- oder Bewegungssteuerungssystem aufweist,
- FIG 2: einen Verlauf aufgenommener Kurven zu dem Ausführungsbeispiel gemäß FIG 1,
- FIG 3: eine lineare Skalierungsfunktion,
- FIG 4: eine Skalierungsfunktion der hier vorgeschlagenen Art, nämlich eine C²-stetige Skalierungsfunktion,
- FIG 5: einen Verlauf aufgenommener Kurven - ähnlich wie in FIG 2 - bei Anwendung einer C²-stetigen Skalierungsfunktion und
- FIG 6: ein Blockdiagramm mit möglichen Orten zur Anwendung einer Funktionalität zur Realisierung der hier vorgeschlagenen Skalierung.

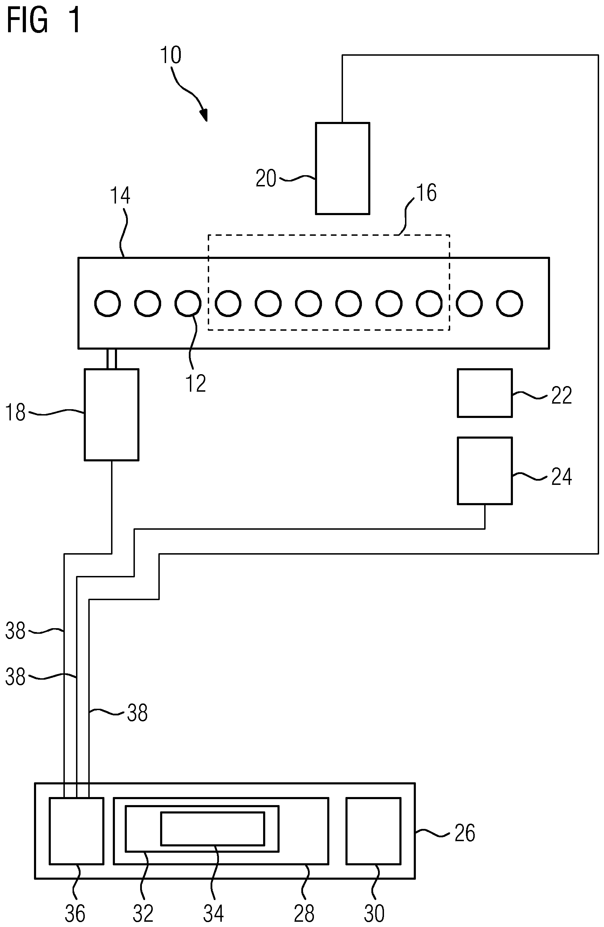

FIG 1 zeigt in schematisch vereinfachter Form als Beispiel für eine Bearbeitungs- oder Werkzeugmaschine 10 eine Produktionsmaschine 10 zum Befüllen von Flaschen 12. Der hier vorgeschlagene Ansatz kommt selbstverständlich für Produktionsmaschinen 10 unterschiedlichster Art in Betracht und ist in keinster Weise auf das im Folgenden erläuterte Ausführungsbeispiel beschränkt.

Die in FIG 1 gezeigte Produktionsmaschine 10 umfasst ein Förderband 14, auf dem sich die zu befüllenden Flaschen 12 befinden. Mit dem Förderband 14 werden die Flaschen 12 zu einer Fülleinrichtung 16 transportiert, die sich beim Befüllen der Flaschen 12 teilweise synchron mit dem Förderband 14 bewegt. Dafür umfasst die Produktionsmaschine 10 Antriebe, nämlich zumindest einen ersten Antrieb 18 für das Förderband 14 und einen zweiten Antrieb 20 zur Bewegung der Fülleinrichtung 16. Zur Qualitätskontrolle ist eine Kamera 22 oder dergleichen vorgesehen. Die Kamera 22 wird mit einem eigenen Antrieb, hier einem dritten Antrieb 24, zumindest zeitweise synchron mit den Flaschen 12 auf dem Förderband 14 bewegt, um ein Bild von jeweils einer Flasche 12 zu erfassen. Im Rahmen der Qualitätskontrolle soll nicht jede einzelne Flasche 12 untersucht werden, sondern es reicht aus, wenn von jeder n-ten Flasche mittels der Kamera 22 ein Bild erfasst wird, das in an sich bekannter Art und Weise zur Qualitätskontrolle ausgewertet wird.

Die Position des Förderbands 14 bestimmt die Position der Fülleinrichtung 16 und die Position der Kamera 22. Das Förderband 14 wird demgemäß entsprechend der üblichen Terminologie als Master bezeichnet. Entsprechend handelt es sich bei der Fülleinrichtung 16 und der Kamera 22 um Slaves, denn deren Bewegung oder Position ist von der Bewegung/Position des Masters (Förderband 14) abhängig. Die Bezeichnung Master und Slave wird im Folgenden auch für die jeweiligen Antriebe 18, 20, 24 verwendet. Der Master und der oder jeder Slave einer Produktionsmaschine 10 stellen einen üblicherweise auch als Achse bezeichneten Freiheitsgrad der Produktionsmaschine 10 dar.

Zur Steuerung und Überwachung der Produktionsmaschine 10 ist in an sich bekannter Art und Weise ein Bewegungssteuerungssystem 26 vorgesehen. Dieses umfasst einen Speicher 28 und zumindest eine Verarbeitungseinheit 30 in Form von oder nach Art eines Mikroprozessors. In den Speicher 28 ist ein als Steuerungsprogramm 32 fungierendes Computerprogramm geladen, das im Betrieb des Bewegungssteuerungssystems 26 durch die jeweilige Verarbeitungseinheit 30 ausgeführt wird. Das Steuerungsprogramm 32 umfasst dafür eine Softwareimplementation eines oder mehrerer Steuerungsalgorithmen 34 zur Ansteuerung der Antriebe 18, 20, 24. Unter Kontrolle des Steuerungsprogramms 32 werden dabei über eine Antriebsregelungseinheit 36 Ausgangssignale 38 zur Ansteuerung des jeweiligen Antriebs 18, 20, 24 ausgegeben.

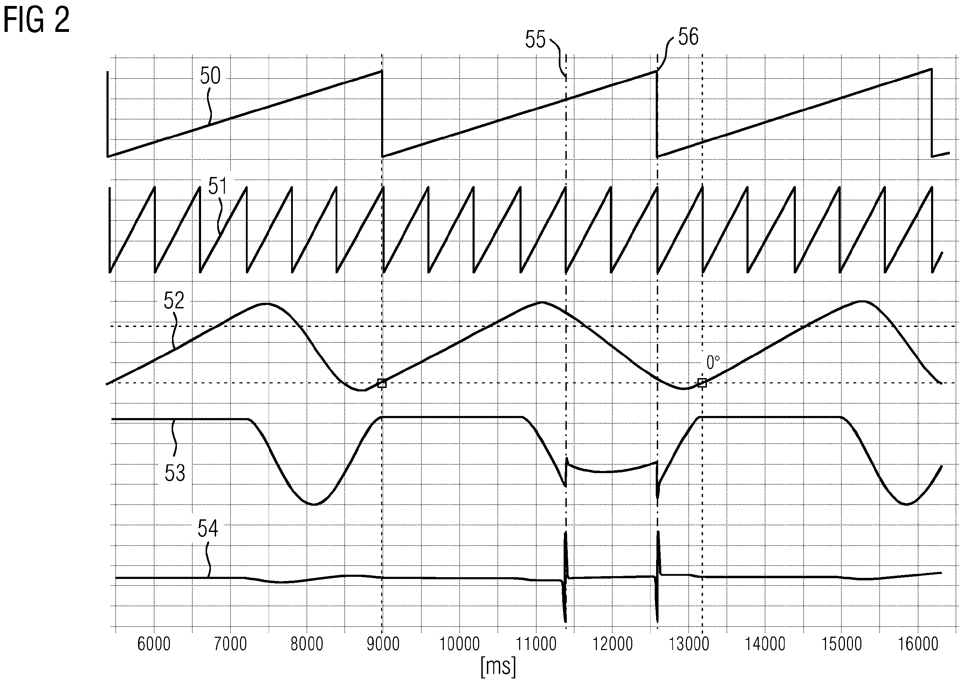

Die Darstellung in FIG 2 zeigt zu diesem Beispiel einen Verlauf einzelner charakteristischer Kurven. Die oberste Kurve 50 zeigt einen Positionsverlauf des Masters und einen sich regelmäßig wiederholenden Masterzyklus. Ein solcher Masterzyklus bezieht sich zum Beispiel auf eine bestimmte Anzahl von Flaschen 12, die in jeweils einem Masterzyklus bewegt werden, zum Beispiel zur Fülleinrichtung 16, und auf eine Bewegung der Flaschen 12 während des Befüllens durch die Fülleinrichtung 16. Unterhalb des Masterzyklus ist eine zweite Kurve 51 gezeigt, die veranschaulicht, dass der Masterzyklus in einzelne Abschnitte aufgeteilt werden kann. Die zweite Kurve 51 zeigt also den auf den Flaschenabstand unterteilten Positionsverlauf des Masters. Auf diese Weise werden zum Beispiel die Bewegung und die Position einzelner Flaschen 12 erfassbar.

Darunter ist mit der von oben gesehen dritten Kurve 52 exemplarisch eine Bewegung eines Slaves in Relation zum Masterzyklus dargestellt und bei der hier veranschaulichten Bewegung handelt es sich um die Bewegung der in FIG 1 genannten Kamera 22, also um den Positionsverlauf der dritten Achse. Im (von links nach rechts gesehen) ersten Drittel der Darstellung dieser Kurve in FIG 2 ist eine Situation gezeigt, bei der sich der Slave im Masterzyklus zunächst mit konstanter Geschwindigkeit bewegt, um auf diese Weise zu einem bestimmten Zeitpunkt eine geeignete Relativposition zu einer auf dem Förderband 14 bewegten Flasche 12 zu erreichen, so dass von dieser ein Kamerabild aufgenommen werden kann. Danach wird der Slave (die Kamera 22) in seine Ausgangsposition bewegt und im nächsten Masterzyklus erfolgt dieselbe Bewegung des Slaves (der Kamera 22).

Im mittleren Drittel der Darstellung, ist eine Situation gezeigt, wie sie eintritt, wenn während kontinuierlich durchlaufender Masterzyklen ein Versatz oder Offset zwischen dem Master (Förderband 14) und dem Slave (Kamera 22) geändert wird, um zum Beispiel zur Qualitätskontrolle nicht jede sechste Flasche 12 in einer während des Masterzyklus bewegten Gruppe von Flaschen 12, sondern in derselben Gruppe jede siebte Flasche 12 zu untersuchen. Dann muss während eines Masterzyklus die Bewegung des Slaves skaliert werden, um die Position der jetzt in der Flaschengruppe relevanten Flasche 12 zu erreichen und während der Aufnahme des Kamerabildes eine synchrone Bewegung mit der Bewegung des Förderbands 14 durchzuführen. Im oben genannten mittleren Drittel der Darstellung befindet sich also der skalierte Bereich (Skalierungsbereich), der zur Hervorhebung in der Darstellung einerseits durch eine mit 55 bezeichnete vertikale Linie, die den Anfang des Skalierungsbereichs darstellt, und eine mit 56 bezeichnete weitere vertikale Linie, die das Ende des Skalierungsbereichs darstellt, begrenzt ist.

Man erkennt aber bei den beiden unterhalb der Bewegungsbahn des Slaves (Positionsverlauf der dritten Achse 52) dargestellten Kurven 53, 54, nämlich eine Kurve 53 für den Geschwindigkeitsverlauf der dritten Achse und eine Kurve 54 für den Beschleunigungsverlauf der dritten Achse, dass eine lineare Skalierung zu Unstetigkeiten im Geschwindigkeitsverlauf führt und dass es zu impulsartigen Spitzen im Beschleunigungsverlauf kommt. Dies belastet zumindest den betroffenen Antrieb 24 und auch die Produktionsmaschine 10 insgesamt.

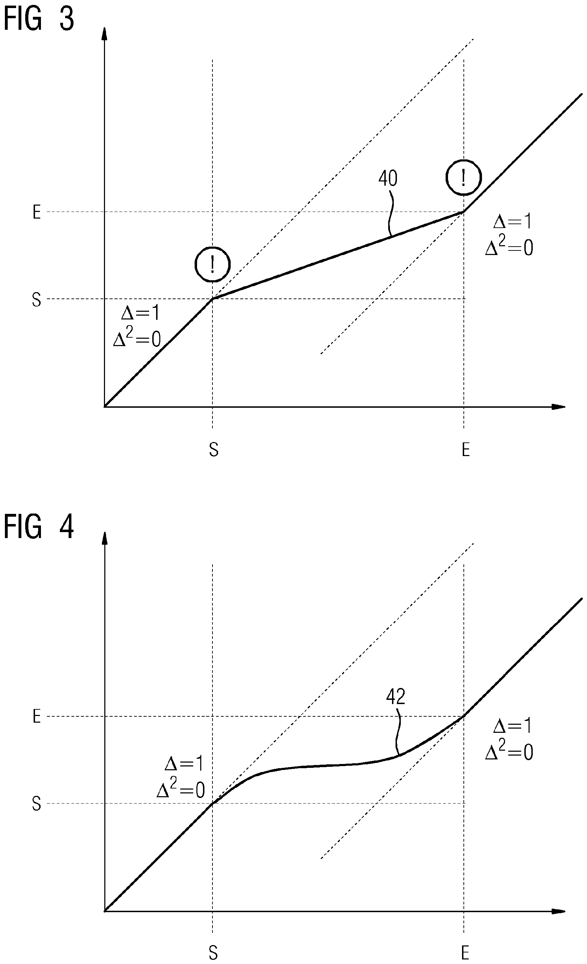

Die Darstellung in FIG 3 zeigt eine Skalierungsfunktion 40 für eine lineare Skalierung. Anhand dieser Skalierungsfunktion 40 lässt sich erläutern, warum es bei einer linearen Skalierung zu den exemplarisch anhand von FIG 2 beschriebenen Unstetigkeiten in der Geschwindigkeit und der Beschleunigung einer skalierten Bewegung einer Achse kommt.

In FIG 3 ist auf der Abszisse der Leitbereich der Masterachse (bei der in FIG 1 gezeigten Situation das Förderband 14) aufgetragen. Entsprechend ist auf der Ordinate der skalierte Leitwert aufgetragen. Dieser wird als Leitwert für die Kurvenscheibe verwendet. Die Skalierung findet zwischen einem mit "S" bezeichneten Startpunkt und einem mit "E" bezeichneten Endpunkt statt und in der Darstellung ist unmittelbar erkennbar, dass sich aufgrund der linearen Skalierung an den beiden jeweils mit einem Ausrufezeichen (!) gekennzeichneten Stellen eine Unstetigkeit in der Ableitung der Skalierungsfunktion 40 ergibt, die zu Unstetigkeiten im Geschwindigkeits- und Beschleunigungsverlauf der resultierenden Bewegungsbahn (siehe FIG 2) führt.

Für die Bereiche vor und nach dem skalierten Bereich, also zwischen dem Startpunkt "S" und dem Endpunkt "E", ist mit Δ=1 und Δ²=0 die Steigung Δ der Skalierungsfunktion 40 und die Krümmung Δ² der Skalierungsfunktion 40 angegeben. Eine Steigung Δ=1 bedeutet, dass der Leitwert in diesem Bereich nicht skaliert wird. Eine Krümmung Δ²=0 bedeutet, dass in dem entsprechenden Abschnitt der Skalierungsfunktion 40 beim Bewegen des Masters und des Slaves entlang der jeweiligen Bewegungsbahn aufgrund der zugrunde liegenden Skalierungsfunktion keine Änderung der aus der Kurvenscheibe resultierenden Geschwindigkeit und Beschleunigung erfolgt.

Die mit der linearen Skalierung verbundene Unstetigkeit der Skalierungsfunktion 40 führt an den im Folgenden auch als Unstetigkeitsstellen bezeichneten Übergangsstellen vom unskalierten Bereich zum skalierten Bereich und vom skalierten Bereich zum unskalierten Bereich zu einer sprunghaften Änderung der ersten Ableitung des skalierten Leitwerts (hier der manipulierte Leitwert der Kurvenscheibe), der Geschwindigkeit, und entsprechend zu einer stoßartigen Änderung der zweiten Ableitung des Folgewerts, der Beschleunigung.

Solche sprunghaften Änderungen der Geschwindigkeit sind für die beteiligten Aggregate, also die jeweiligen Antriebe 24 und die nachfolgende Mechanik, ungünstig, so dass eine lineare abschnittsweise Skalierung aufgrund der resultierenden Unstetigkeiten bisher nur in sogenannten Rastbereichen möglich war. Dementsprechend war also zum Beispiel eine Skalierung des Wertebereichs des Masters dort möglich, wo der Slave keine Bewegung ausführt, also in Stillstand ist. Dies wird als Rastposition bezeichnet.

Um solche Unstetigkeitsstellen und damit einhergehende sprunghafte Geschwindigkeitsänderungen sowie stoßartige Beschleunigungsänderungen zu vermeiden, ist gemäß dem hier vorgestellten Ansatz vorgesehen, dass der zu skalierende Bereich mittels einer monotonen und C²-stetigen Funktion gestreckt oder gestaucht wird. Eine C²-stetige Funktion ist dabei eine Funktion, deren erste und zweite Ableitung stetig ist. Aufgrund der C²-Stetigkeit ist ein resultierender, skalierter Abschnitt an die dem skalierten Bereich vorangehenden und nachfolgenden Abschnitte der nach der Skalierung mit einer solchen Skalierungsfunktion 42 resultierenden Bewegung beschleunigungsstetig ankoppelbar und in der resultierenden Bewegung beschleunigungsstetig angekoppelt. Eine beschleunigungsstetige Ankoppelbarkeit und eine beschleunigungsstetige Ankoppelung bedeutet, dass sich die Beschleunigung (und auch die zugrunde liegende Geschwindigkeit) beim Übergang vom nicht skalierten Bereich zum skalierten Bereich und später vom skalierten Bereich zum nicht skalierten Bereich nur stetig und nicht sprunghaft ändert.

Eine für eine solche Skalierung einer Kurvenscheibe verwendbare Skalierungsfunktion 42 ist exemplarisch in FIG 4 gezeigt. Die Darstellung in FIG 4 basiert auf der Darstellung in FIG 3, so dass auf die dortigen Ausführungen verwiesen wird, und zwischen den Start- und Endpunkten (S, E) des skalierten Bereichs ist - anders als die lineare Skalierung in FIG 3 - jetzt eine Skalierung mit einer C²-stetigen Funktion gezeigt. Aufgrund einer solchen Skalierung mit einer C²-stetigen Funktion ergibt sich im Startpunkt (S) und im Endpunkt (E) des skalierten Bereichs die oben erwähnte beschleunigungsstetige Ankoppelung einer Bewegungsbahn an die nicht skalierten Abschnitte der Bewegungsbahn und zwischen dem Start- und Endpunkt (S, E) ist der skalierte Verlauf der resultierenden Bewegungsbahn ebenso wie die zugrunde liegende Skalierungsfunktion 42 ebenfalls stetig und auch in der ersten und zweiten Ableitung stetig, so dass sich auch hier Geschwindigkeit und Beschleunigung nur stetig und nicht sprunghaft ändern.

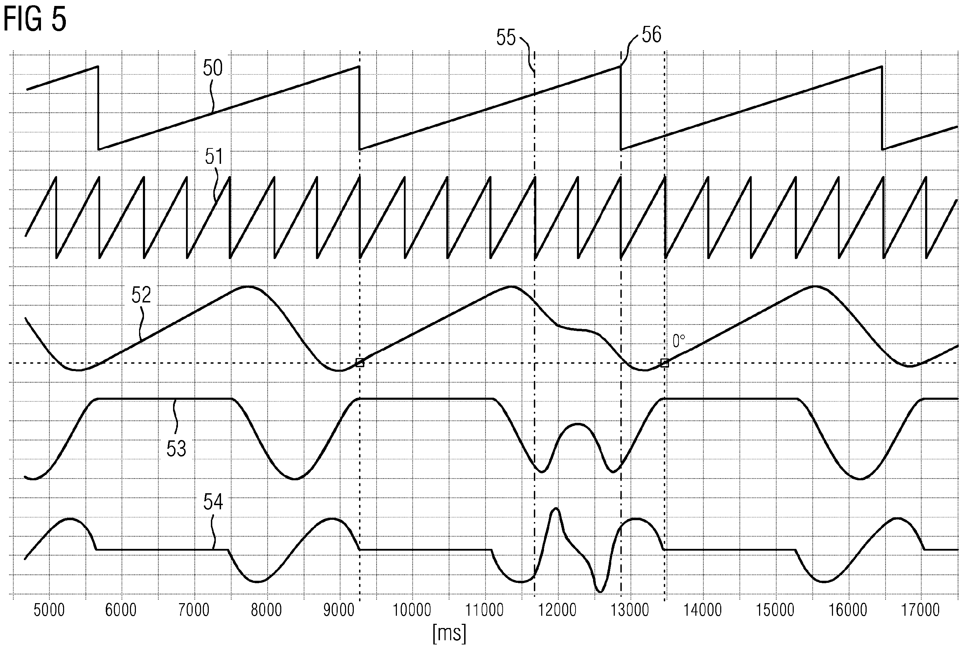

Das Resultat einer solchen Skalierung mit einer C²-stetigen Skalierungsfunktion 42 (FIG 4) ist in der Darstellung in FIG 5 gezeigt, wobei speziell die Darstellung des Beschleunigungsverlaufs 54 der dritten Achse als qualitative Darstellung mit einer im Vergleich zu der Darstellung in FIG 2 unterschiedlichen Skalierung der Ordinate zu sehen ist. Hier erfolgt im zweiten vollständig gezeigten Masterzyklus, also zwischen den Anfang und das Ende des Skalierungsbereichs darstellenden vertikalen Linien 55, 56, eine Skalierung der Bewegung der dritten Achse, also der Slaveachse. Die Skalierung basiert diesmal - im Unterschied zu der in FIG 2 gezeigten Skalierung - nicht auf einer linearen Skalierungsfunktion 40 (FIG 3), sondern auf einer C²-stetigen Skalierungsfunktion 42, wie diese in FIG 4 gezeigt ist. Man erkennt im Vergleich zur Darstellung in FIG 2 den Unterschied im resultierenden Geschwindigkeits- und Beschleunigungsverlauf 53, 54. Demnach vermeidet die Skalierung mit einer C²-stetigen Skalierungsfunktion 42 Unstetigkeiten im Geschwindigkeitsverlauf 53 der dritten Achse und im Beschleunigungsverlauf 54 der dritten Achse.

Als Basis für die C²-stetige Skalierungsfunktion 42 fungiert dabei ein Bezierspline 4. Grades. Solche Splines und deren Definition bzw. mathematische Grundlage, insbesondere die Bestimmung der jeweiligen Koeffizienten, sind an sich bekannt, so dass hier auf entsprechende Erläuterungen verzichtet werden kann. Unter Verwendung des ebenfalls an sich bekannten Sline Algorithmus werden die zur Vorgabe gewünschter Steigungen und Krümmungen notwendigen Gewichtspunkte ermittelt. Diese werden so gewählt, dass sich ein monotoner Verlauf des Splines mit einer homogenen Krümmungsverteilung ergibt. Ein Algorithmus zur Bestimmung der Koeffizienten und der Gewichtspunkte einer solchen C²-stetigen Funktion ist beim gezeigten Ausführungsbeispiel in Software implementiert und zum Beispiel Bestandteil des in den Speicher 28 des Bewegungssteuerungssystems 26 geladenen Steuerungsprogramms 32.

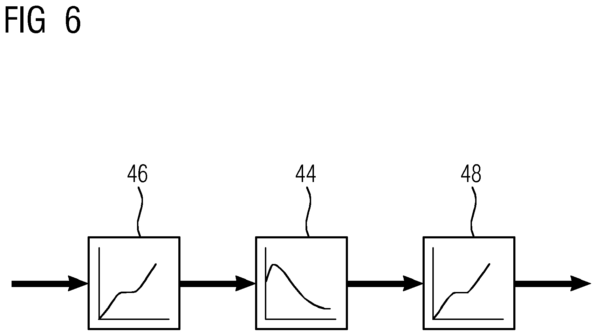

Die Darstellung in FIG 6 zeigt in schematisch vereinfachter Art und Weise, dass die C²-stetige Skalierung mit einer C²-stetigen Skalierungsfunktion 42 sowohl auf den Definitionsbereich wie auch auf den Wertebereich einer jeweils zu skalierenden Funktion 44 angewandt werden kann. Die zu skalierende Funktion 44 ist in dem Blockschaltbild symbolisch in der Mitte gezeigt. Dabei handelt es sich zum Beispiel um eine Kurvenscheibe. Eine zugrunde liegende Polynomtabelle ist zum Beispiel als Steuerungsalgorithmus 34 sowie als Parametrierung des Steuerungsalgorithmus 34 im Speicher 28 des Bewegungssteuerungssystems 26 hinterlegt.

In Bezug auf eine solche Kurvenscheibe kann deren Leitwert C²-stetig skaliert werden. Dafür ist auf einer Eingangsseite der zu skalierenden Kurvenscheibe 44 ein Skalierungsfunktionsblock 46 gezeigt. Der Skalierungsfunktionsblock 46 ist eine hier in Software implementierte Funktionalität zur Ermittlung einer C²-stetigen Skalierungsfunktion 42 zur abschnittsweisen nichtlinearen Skalierung des jeweils zur Skalierung ausgewählten Bereichs (siehe z.B. FIG 4 und dort den Bereich zwischen dem Startpunkt S und dem Endpunkt E) und damit ebenfalls Bestandteil des in den Speicher 28 des Bewegungssteuerungssystems 26 geladenen Steuerungsprogramms 32. Der Skalierungsfunktionsblock 46 realisiert die oben beschriebene abschnittsweise Skalierung des Leitwerts mittels einer monotonen C²-stetigen Skalierungsfunktion 42, so dass der zu skalierende Bereich gestreckt oder gestaucht wird. Die C²-stetige Skalierung kann sich zusätzlich oder alternativ auch auf den Folgebereich einer jeweils zu skalierenden Kurve 44 beziehen. Insofern ist in FIG 6 auch ein der zu skalierenden Kurve 44 nachgeordneter Skalierungsfunktionsblock 48 gezeigt. Die eingangsseitige C²-stetige Skalierung der Kurvenscheibe 44 (Skalierungsfunktionsblock 46) bewirkt eine Skalierung der Bewegungsinformationen des Leitwerts (Abszisse der Kurvenscheibe 44 wird skaliert). Die ausgangsseitige C²-stetige Skalierung der Kurvenscheibe 44 (Skalierungsfunktionsblock 48) bewirkt eine Skalierung der Bewegungsinformationen des Folgewerts (Ordinate der Kurvenscheibe 44 wird skaliert).

Die Darstellung in FIG 6 zeigt damit, dass der Leitwert über eine C²-stetige Skalierungsfunktion 42, wie in FIG 4 gezeigt, also zum Beispiel eine mit dem eingangsseitigen Skalierungsfunktionsblock 46 realisierte erste C²-stetige Skalierungsfunktion 42, manipuliert werden kann. Dieser manipulierte Leitwert wird der Kurvenscheibe 44 zugeführt. Der daraus resultierende Bewegungsverlauf (Slave unskaliert) kann über eine mit dem ausgangsseitigen Skalierungsfunktionsblock 48 realisierte zweite C²-stetige Skalierungsfunktion 42 manipuliert werden. Der sich daraus ergebende Folgewert kann dann beispielsweise dem dritten Antrieb 24 zugeführt werden.

## Patentansprüche

1. Verfahren zum Betrieb eines Bewegungssteuerungssystems (26), wobei zum abschnittsweisen Skalieren einer Bewegungsbahn eine C²-stetige Skalierungsfunktion (42) verwendet wird, wobei nach einem Spline-Algorithmus Eckpunkte eines die C²-stetige Skalierungsfunktion (42) einschließenden und deren Verlauf bestimmenden Polygons ermittelt werden, die einen monotonen Verlauf der C²-stetigen Skalierungsfunktion (42) und eine homogene Krümmungsverteilung entlang der C²-stetigen Skalierungsfunktion (42) gewährleisten.

2. Computerprogramm (32) mit Programmcodemitteln, um alle Schritte des Anspruchs 1 durchzuführen, wenn das Computerprogramm (32) auf einem Steuergerät eines Bewegungssteuerungssystems (26) ausgeführt wird.

3. Computerprogrammprodukt, insbesondere digitales Speichermedium, mit Programmcodemitteln, die auf einem computerlesbaren Datenträger gespeichert sind, um das Verfahren nach Anspruch 1 durchzuführen, wenn das Computerprogrammprodukt auf einem Steuergerät eines Bewegungssteuerungssystems (26) ausgeführt wird.

4. Bewegungssteuerungssystem (26) mit einer Verarbeitungseinheit (30) und einem Speicher (28), in den ein Computerprogramm (32) nach Anspruch 2 geladen ist, das im Betrieb des Bewegungssteuerungssystems (26) durch die Verarbeitungseinheit (30) ausgeführt wird.

## Claims

1. Method for operating a motion control system (26), wherein a C²-continuous scaling function (42) is used to scale sections of a motion path, wherein corner points of a polygon, which includes the C²-continuous scaling function (42) and determines the profile thereof, are determined according to a spline algorithm and ensure a monotonous profile of the C²-continuous scaling function (42) and a homogeneous curvature distribution along the C²-continuous scaling function (42).

2. Computer program (32) having program code means for carrying out all steps of Claim 1 when the computer program (32) is executed on a control device of a motion control system (26).

3. Computer program product, in particular digital storage medium, having program code means which are stored on a computer-readable data storage medium in order to carry out the method according to Claim 1 when the computer program product is executed on a control device of a motion control system (26).

4. Motion control system (26) having a processing unit (30) and a memory (28), into which a computer program (32) according to Claim 2 is loaded, said computer program being executed by the processing unit (30) during operation of the motion control system (26).

## Revendications

1. Procédé destiné au fonctionnement d'un système de commande de mouvement (26), dans lequel pour un redimensionnement par tronçons d'une trajectoire une fonction de redimensionnement continue c² (42) est utilisée, dans lequel selon un algorithme de spline des sommets d'un polygone comprenant la fonction de redimensionnement continue c² (42) et définissant l'évolution de celle-ci sont déterminés, lesquels garantissent une évolution répétitive de la fonction de redimensionnement continue c² (42) et une répartition de courbure homogène le long de la fonction de redimensionnement continue c² (42).

2. Programme informatique (32) avec des moyens de code de programme pour réaliser toutes les étapes de la revendication 1 lorsque le programme informatique (32) est exécuté sur un appareil de commande d'un système de commande de mouvement (26).

3. Produit de programme informatique, en particulier support de mémoire, avec des moyens de code de programme, qui sont stockés sur un support de données lisible par un ordinateur pour réaliser le procédé selon la revendication 1 lorsque le produit de programme informatique est exécuté sur un appareil de commande d'un système de commande de mouvement (26) .

4. Système de commande de mouvement (26) avec une unité de traitement (30) et une mémoire (28) où un programme informatique (32) selon la revendication 2 est chargé, lequel est réalisé par le biais de l'unité de traitement (30) lors du fonctionnement du système de commande de mouvement (26).
